# EUROPÄISCHE PATENTSCHRIFT

(11) **EP 1 627 399 B1**
(45) Veröffentlichungstag und Bekanntmachung des Hinweises auf die Patenterteilung: **29.04.2009**
(21) Anmeldenummer: 04739313.7
(22) Anmeldetag: 24.05.2004
(51) Int. Cl.: H01H 19/10, G05G 5/06

(54) **RASTEINRICHTUNG FÜR EIN DREHEINSTELLBARES, ELEKTRISCHES BAUELEMENT**
RATCHET DEVICE FOR AN ELECTRICAL COMPONENT WHICH MAY BE ADJUSTED BY ROTATION
DISPOSITIF A CRANS D'ARRET POUR UN COMPOSANT ELECTRIQUE POUVANT ETRE AJUSTE PAR ROTATION

(30) Priorität: 24.05.2003 DE 10323544
(43) Veröffentlichungstag der Anmeldung: 22.02.2006
(73) Patentinhaber: Preh GmbH, 97616 Bad Neustadt a.d. Saale (DE)
(72) Erfinder: ERDLOFF, Dirk, 97618 Hohenroth (DE)
(74) Vertreter: Bauer, Wulf
(86) Internationale Anmeldenummer: PCT/EP2004/005551
(87) Internationale Veröffentlichungsnummer: WO 2004/105066

(56) Entgegenhaltungen:
- FR-A- 2 694 126
- US-A- 2 631 211

## Beschreibung

### Technisches Gebiet

Die Erfindung betrifft eine Rasteinrichtung für ein dreheinstellbares, elektrisches Bauelement, insbesondere einen Drehschalter oder einen Drehwiderstand, mit einer Blattfeder, die unter Federkraft gegen eine Rastkontur anliegt.

### Stand der Technik

Als dreheinstellbare, elektrische Bauelemente gelten zum Beispiel Drehschalter oder Drehwiderstände, wobei solche Bauelemente dort eingesetzt werden, wo ein häufiges Verstellen der Betriebszustände oder der Vorgabewerte vorgesehen ist. Eine Rasteinrichtung erleichtert einer Bedienperson dabei das Auffinden von Betriebszuständen, diese sind mittels der Rasteinrichtung während des Drehstellens taktil und mit unter akustisch wahrnehmbar. Insbesondere bei dreheinstellbaren Widerständen wird das Verstellen durch eine Rasteinrichtung spürbar. Die Rastmittel einer Rasteinrichtung bestehen im wesentlichen aus einem Federelement, das zumeist einen gebogenen Vorsprung, kurz Rastnase, aufweist und einer Rastscheibe mit einer oder mehreren benachbarten Rastvertiefungen, die eine mit der Rastnase zusammenwirkende Rastkontur aufweist. Eines der beiden Rastmittel, Rastnase oder Rastkontur ist drehfest mit einem Stellglied des betreffenden Bauelementes verbunden. Das jeweils andere Rastmittel ist dem gegenüber am Bauelement ortsfest gehalten. Die beiden Rastmittel gleiten beim Drehstellen relativ zueinander, dabei erzeugen die Rastmittel taktile Rastmarken.

Aus dem Deutschen Gebrauchsmuster 295 01 692 ist eine Rasteinrichtung bekannt, die aus einem äußeren Gehäuse und einem inneren Rotor besteht, der mit dem drehstellbaren Bedienelement verbunden ist und einer Blattfeder die im Inneren des Rotors angeordnet ist. An einer Stelle des Rotors ragt die Blattfeder mit einer Rastnase aus der zylindrischen Rotorwandung hinaus in eine an der inneren Umfangsfläche des äußeren Gehäuses befindliche Rastkontur hinein. Während des Drehstellens verwindet sich die Rastnase zunächst und wird durch die Rotorwand zurückgeschoben. Beim Einrasten der Rastnase in eine Vertiefung der Rastkontur entspannt sich die Blattfeder augenblicklich und schlägt gegen die Seitenwand. Das Anschlagen ist dabei hörbar.

Eine weitere gattungsgemäße Anordnung einer Rasteinrichtung in einem dreheinstellbaren Bauelement ist in der DE 195 05 737 offenbart. Zum definierten Einstellen eines Drehwinkels sind am Innenboden des Gehäusegrundkörpers zwei Bügelfedern eingespannt. Diese weisen zum Zusammenwirken mit einen Rastscheibe Auswölbungen auf. Die Rastscheibe besitzt an ihrem Umfang jeder Feder zugeordnet jeweils zwei entsprechende Rastkerben für die einstellbaren Drehwinkel. Weiterhin weist die Rastscheibe an ihrer Umfangsfläche jeweils für jede Bügelfeder eine Auflaufschräge auf, die beim Drehen der Schaltnocke entgegen dem Uhrzeigersinn für ein Rückstelldrehmoment zur selbsttätigen Rückstellung der Schaltnocke in die Grundstellung sorgt. Zusätzlich sind an der Rastscheibe zwei Anschläge angeformt, die zur Begrenzung des Verdrehens der Schaltnocke mit einem am Innenboden des Gehäusegrundkörpers ausgeformten Vorsprung zusammenwirken.

Aus der FR 2 694 126 A ist eine Rasteinrichtung für ein Kraftfahrzeug, geeignet für ein dreheinstellbares, elektrisches Bauelement, insbesondere für einen Drehschalter oder einen Drehwiderstand, mit einer Blattfeder, die unter Federkraft gegen eine Rastkontur anliegt bekannt. Die Rastkontur ist umfänglich an einer Rastscheibe angebracht und die Endbereiche der Blattfeder liegen unter Federspannung an der Rastkontur an.

### Darstellung der Erfindung

Der Erfindung liegt die Aufgabe zu Grunde eine Rasteinrichtung herzustellen, die mit einfachsten Mitteln die Einstellung eines definierten Drehmomentenverlaufs ermöglicht und die sich gleichzeitig durch eine kompakte Bauweise auszeichnet.

Diese Aufgabe wird erfindungsgemäß dadurch gelöst, daß die Rastkontur umfänglich an einer Rastscheibe angebracht ist und die Endbereiche der Blattfeder unter Federspannung an der Rastkontur anliegen, wobei die Blattfeder lediglich in den Endbereichen radial geführt, aber ansonsten frei beweglich ist. Vorteilhafte Ausgestaltungsvarianten der Erfindung sind in den Unteransprüchen beschrieben. Durch die erfindungsgemäße umfängliche Anordnung der Blattfeder zur Rastscheibe ist nun die Möglichkeit geschaffen mit einfachsten Mitteln ein definiertes Drehmoment an der Rasteinrichtung zu erzeugen. Die axiale Höhe der Rasteinrichtung ist auf die Rastscheibe und die Blattfeder beschränkt und kann somit in Abhängigkeit vom zu erzeugenden Drehmoment beliebig niedrig ausgebildet werden. Ein weiterer Vorteil der Erfindung ist, daß sich die Blattfeder durch ihre Vorspannung selbsttätig auf der Rastfeder hält und somit leicht zu montieren ist.

### Kurze Beschreibung der Zeichnung

Die Erfindung wird nachstehend anhand von Zeichnungen näher erläutert. Es zeigen:
- Figur 1: die Draufsicht auf eine erfindungsgemäße Ausgestaltung einer Rasteinrichtung mit Außenverzahnung,
- Figur 2: die Seitenansicht auf eine erfindungsgemäße Ausführungsform der Rasteinrichtung mit Außenverzahnung,
- Figur 3: eine alternative Ausführung einer Blattfeder zum Einsatz in der Rasteinrichtung.
- Figur 4: die Draufsicht auf eine erfindungsgemäße Ausgestaltung einer Rasteinrichtung mit Innenverzahnung,
- Figur 5: die Seitenansicht auf eine erfindungsgemäße Ausführungsform der Rasteinrichtung mit Innenverzahnung.

### Wege zur Ausführung der Erfindung

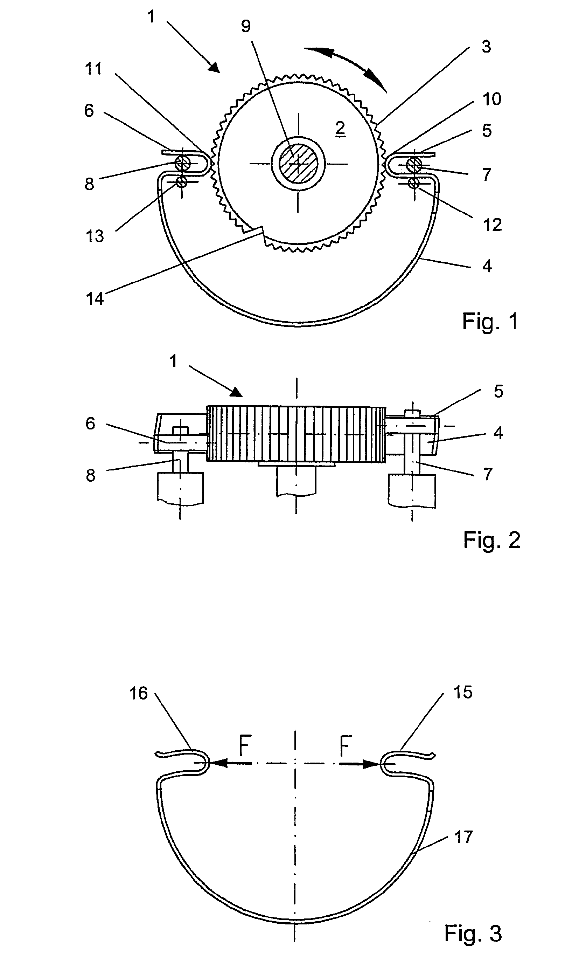

In Figur 1 ist eine Ausführungsform der erfindungsgemäßen Rasteinrichtung 1 dargestellt. Die Rasteinrichtung 1 besteht dabei aus einer Rastscheibe 2 mit einer umfänglichen Rastkontur 3, einer Blattfeder 4, die an ihren Enden 5, 6 u-förmig gebogen ist und den Zapfen 7, 8, in denen die Enden 5, 6 der Rastfeder 4 radial geführt sind. In der Mitte 9 der Rastscheibe 2 steht die Rasteinrichtung 1 mit dem nicht dargestellten Bedienelement der Rasteinrichtung 1 in Verbindung.

Die Blattfeder 4 ist in Richtung der Rastscheibe 2 rechtwinkelig abgewinkelt. Im Kontaktbereich 10, 11 ist die Blattfeder u-förmig gebogen, so daß die Enden 5, 6 der Blattfeder von der Rastscheibe 2 wegweisen. Die Krümmung der Rastfeder im Kontaktbereich 10, 11 ist so gewählt, daß ein sanftes Einrasten in die Rastkontur 3 ermöglicht ist. Der Durchmesser der gekrümmten Bereiche liegt dabei zwischen dem halben bis 3-fachen der Teilung der Verzahnung der Rastkontur 3. Die gebogenen Enden 5, 6 der Rastfeder 4 ermöglichen einerseits ein vorteilhaftes sanftes Gleiten ohne schlagartige Belastungen der Rastscheibe 2 und gleichzeitig ein radiales Führen der Blattfeder 4 in den Zapfen 7, 8. Das Führen der Blattfeder 4 in unmittelbarer Nähe der Rastscheibe bietet gleichzeitig den erfindungsgemäßen Vorteil, daß ein Springen und Verwinden der Rastfeder unterbunden wird. Durch eine gezielte Auslegung der Zapfen mit Anschlägen und/oder Nuten zur Führung der Enden 5, 6 der Blattfeder 4 kann die Blattfeder 4 zusätzlich stabilisiert werden. Dabei wird die Blattfeder 4 nur in den gebogenen Enden 5, 6 radial geführt und eventuell über Anschläge und/oder Nuten gehalten. Um die Lage der Blattfeder 4 zu stabilisieren wird erfindungsgemäß vorgeschlagen, nicht nur im Inneren der Rastnasen 5, 6 Zapfen 7, 8 anzuordnen, sondern auch außerhalb der Rastnasen 5, 6 zusätzliche Führungszapfen 12, 13 anzuordnen. Hieraus ergibt sich der Vorteil, daß die Toleranz beim Biegen der Rastnasen 5, 6 weniger genau sein muß, um die Rastnasen 5, 6 radial zu führen. Die radiale Führung der Rastnasen 5, 6 erfolgt dann zwischen den Führungszapfen 12, 13 und den Zapfen 7,8, die Blattfeder 4 ist somit spielfrei geführt. Dabei kann über den Spalt zwischen den Zapfen 12 und 7 sowie den Zapfen 13 und 8, ausgehend von einer spielfreien Aufnahme bis hin zu einem entsprechend gewähltem Spiel zwischen der Blattfeder 4, den Führungszapfen 12, 13 und den Zapfen 7, 8, die Geräuschentwicklung beim Betätigen der Rasteinrichtung 1 von einem dumpfen, leisen bis zu einem hellen, lauten "Klick" eingestellt werden. Der restliche Teil der Blattfeder 4 ist frei beweglich. Eine axiale Führung der Blattfeder 4 dient nur zur Definition der Position der Blattfeder 4 relativ zur Rastscheibe 2. Hieraus ergibt sich ein weiterer Vorteil, nämlich der, daß die Rastscheibe 2 von den Enden 5, 6 der Rastfeder 4 immer mit gleich großen Kräften beaufschlagt wird. Die gebogenen Enden 5, 6 der Rastfeder 4 werden auch als Rastnasen 5, 6 bezeichnet. Ein Abheben der einzelnen Rastnasen 5, 6 wird durch die symetrische Kraftverteilung ebenfalls vermieden. Gleichzeitig kann durch die Einstellung der entsprechenden Kontaktkraft zwischen der Rastscheibe 2 und der Blattfeder 4 ein Klappern der Blattfeder 4 bei der Einwirkung von Vibrationen unterdrückt werden.

In Kombination mit der Rastscheibe 2 erzeugt die Rastfeder 4 ein alternierendes Drehmoment. Dabei kann das Drehmoment einerseits über die Vorspannung in der Blattfeder variiert oder über das Profil der Rastkontur 3 eingestellt werden. Eine weitere erfindungsgemäße und vorteilhafte Möglichkeit den Drehmomentenverlauf der Rasteinrichtung 1 zu variieren ist der, die Rastscheibe 2 als Kurvenscheibe auszulegen. Im dargestellten Ausführungsbeispiel weist die Rastscheibe 2 einen konstanten Durchmesser auf. Es ist erfindungsgemäß aber auch vorstellbar, die Rastscheibe umfänglich mit unterschiedlichen Durchmessern zu versehen, so daß zum Beispiel Kurvenscheiben entstehen. Kombiniert mit der Ausbildung der Rastscheibe 2 als Kurvenscheibe kann, innerhalb der durch die Geometrie der Rastfeder 4 im Kontaktbereich 10, 11 gesetzten Grenzen, ein beliebiger Drehmomentenverlauf erzeugt werden.

Um bestimmte Einstellungen des elektrischen Bauelements über die Rasteinrichtung 1 festzulegen wird weiterhin erfindungsgemäß vorgeschlagen, am Umfang der Rastkontur 3 Vertiefungen 14 einzubringen. Während des Drehens der Rastscheibe 2 rastet die Rastnase 5, 6 in eine Vertiefung 14 ein und der Bediener ist in der Lage diese Stellung des Bauelements als definierte Einstellung wieder zu erkennen. Durch das Einbringen mehrerer Vertiefungen 14 in den Umfang der Rastscheibe 2 können somit beliebig viele Stellungen des Bauelements definiert werden.

Die Figur 2 zeigt die Seitenansicht auf die erfindungsgemäße Rasteinrichtung 1. Die Rastnasen 5, 6 sind von den Zapfen 7, 8 gehalten. Die Zapfen sind dabei am Gehäuse des elektrischen Bauelements befestigt. Die Blattfeder 4 ist im Bereich der Rastnasen 5, 6 verjüngt und axial versetzt ausgebildet, so daß die Blattfeder 4 an axial unterschiedlichen Bereichen der Rastscheibe 2 anliegt. Werden nun in die axial unterschiedlichen Anlagebereiche an der Rastscheibe an verschiedenen unsymmetrischen Positionen des Umfangs Vertiefungen 14 eingebracht, so rastet jeweils eine Rastnase 5, 6 zu einem unterschiedlichen Zeitpunkt in die Vertiefung 14 ein. Es kann somit eine noch genauere Einteilung der Einstellungen der unterschiedlichen Rastpositionen erfolgen oder es können ungerade Teilungszahlen der Rast dargestellt werden.

In dem dargestellten Ausführungsbeispiel ist die Rastkontur 3 an der gesamten Umfangsoberfläche der Rastscheibe 2 eingebracht. Es ist erfindungsgemäß aber auch vorstellbar nur einen Teilbereich der Umfangsoberfläche der Rastscheibe 2 mit einer Rastkontur 3 zu versehen. So kann beispielsweise die Rastkontur lediglich über 180° an der Umfangsoberfläche der Rastscheibe angebracht sein, so daß sich während des Betätigens des Bauelements lediglich eine Rastnase 5, 6 im Eingriff mit der Rastkontur 3 befindet. Am Ende einer solchen glatten Umfangsoberfläche der Rastscheibe 2 können selbstverständlich auch Vertiefungen 14 angebracht sein. Neben den Vertiefungen 14 ist es ebenfalls vorstellbar, Erhöhungen an der Umfangsoberfläche der Rastkontur anzubringen. Diese Erhöhungen stoßen dann umfänglich gegen die Rastnasen und begrenzen somit den Drehwinkel des Bauelements oder wirken, mit inversem Vorzeichen, wie Vertiefungen mit Drehmomentspitzen im Drehmomentenverlauf. Es ist natürlich auch jede Kombination aus Rastkontur 3, glatter Umfangsoberfläche, Vertiefungen 14 und Erhöhungen vorstellbar.

Erfindungsgemäß ist es vorstellbar die Rastscheibe 2 in axialer Richtung zu teilen, so daß mindestens zwei übereinander angeordnete Rastscheibenbereiche 2 gebildet sind und jede Rastnase 5, 6 an einem separaten Rastscheibenbereich 2 anliegt. Die separaten Rastscheibenbereiche können entweder einen konstanten Durchmesser aufweisen oder ebenfalls als Kurvenscheibe ausgebildet sein. Eine Kombination aus konstantem Durchmesser und Kurvenscheibe ist erfindungsgemäß ebenfalls vorstellbar. Hierdurch ist nun die Möglichkeit geschaffen, einen beliebigen Drehmomentenverlauf auf das Stellelement des Bauelements zu übertragen.

In Abhängigkeit von der Größe der Auslenkung der Enden 5, 6 der Blattfeder 4 verschieben sich die Kontaktpunkte zwischen Rastnase 5, 6 und Rastscheibe 2, bezogen auf die Achse der Rastscheibe 2. Dieser sogenannte Mittenversatz kann durch die in Figur 3 dargestellte Ausbildung der Rastnasen 15, 16 ausgeglichen werden. Dabei sind die Rastnasen 15, 16 u-förmig gebogen, weisen mit ihrem gekrümmten Bereich in Richtung der Rastscheibe 2 und sind gleichzeitig gebogen ausgeführt. Durch die bogenförmige Ausführung der Rastnasen 15, 16 kann erfindungsgemäß ein Mittenversatz ausgeglichen werden, so daß der Kraftangriffspunkt der Rastfeder 17 stets senkrecht auf die Rastscheibe 2 wirkt.

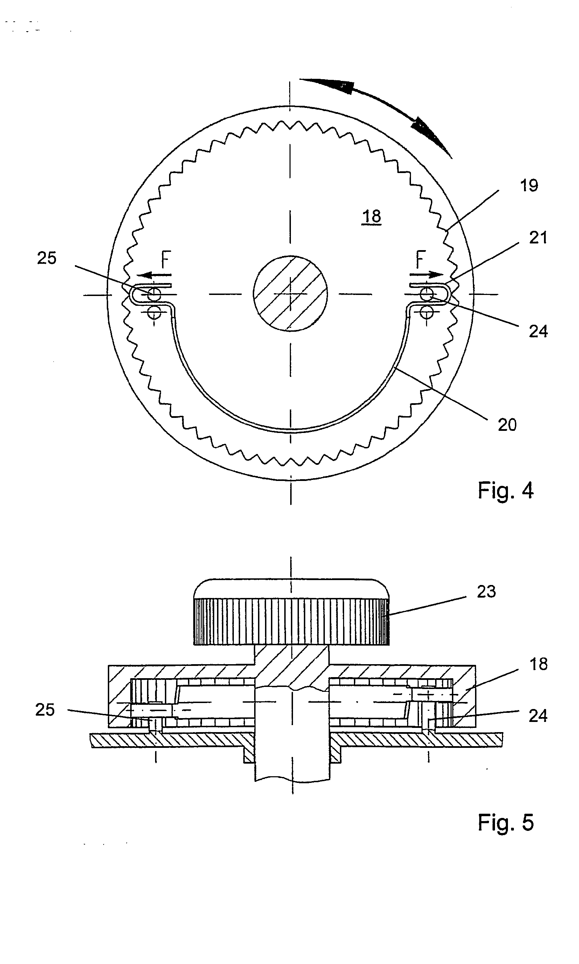

In einer weiteren Ausgestaltung der Erfindung ist es ebenfalls vorstellbar, die Rastscheibe 18 mit einer Innenverzahnung 19 auszustatten, wie in Figur 4 dargestellt. Die Rastfeder 20 ist prinzipiell in gleicher Weise gelagert wie bei der außen verzahnten Rastscheibe 2, nur daß die Rastnasen 21, 22 radial nach außen gebogen und gegen die Innenkontur wirken. Dabei wirkt die Federkraft F der Rastfeder 20 nach außen gegen die Innenverzahnung 19 der Rastscheibe 18. Der Einsatz einer radial nach außen wirkenden Rastfeder 20 ist je nach konstruktiven Gegebenheiten in der für den Einbau der Rasteinrichtung 1 vorstellbar.

Die Figur 5 zeigt den Schnitt durch die Seitenansicht einer mit einer Innenverzahnung 19 versehenen Rastscheibe 18 und einem an der Rastscheibe befestigten Bedienknopf 23. Bei prinzipiell gleicher Funktionsweise bei Außenverzahnung 3 und Innenverzahnung 19 der Rastscheiben 2, 18 sind die beschriebenen Ausführungsmerkmale zur Rastscheibe 2 auch auf die Rastscheibe 18 übertragbar. Der Bedienknopf 23 besitzt eine zylindrische Form, wobei an der Oberseite eine sich über die gesamte Menge des Griffteils 23 erstreckende Erhebung angeformt ist. Die Haltezapfen 24, 25 können unmittelbar an der Bedienkonsole befestigt sein oder einen Teil der Rasteinrichtung bilden.

## Patentansprüche

1. Rasteinrichtung für ein dreheinstellbares, elektrisches Bauelement, insbesondere Drehschalter oder Drehwiderstand, mit einer Blattfeder (4, 17, 20), die unter Federkraft gegen eine Rastkontur (3, 19) anliegt, wobei die Rastkontur (3, 19) umfänglich an einer Rastscheibe (2, 18) angebracht ist und die Endbereiche der Blattfeder (4, 17, 20) unter Federspannung an der Rastkontur (3, 19) anliegen, **dadurch gekennzeichnet, dass** die Blattfeder (4, 17, 20) lediglich in den Endbereichen radial geführt aber ansonsten frei beweglich ist.

2. Rasteinrichtung nach Anspruch 1, **dadurch gekennzeichnet, daß** die Rastkontur (3) an der Außenseite einer Rastscheibe (2) angebracht ist und daß die Blattfeder (4, 17) die Rastscheibe (2) umfänglich umschließt und diametral an der Rastscheibe (2) anliegt.

3. Rasteinrichtung nach Anspruch 1, **dadurch gekennzeichnet, daß** die Rastkontur (19) an der Innenseite einer Rastscheibe (18) angebracht ist und daß die Blattfeder (20) diametral gegen die Rastkontur (19) anliegt.

4. Rasteinrichtung nach einem der Ansprüche 1 bis 3, **dadurch gekennzeichnet, daß** die Enden der Blattfeder (4, 17, 20) im wesentlichen rechtwinklig in Richtung der Rastkontur (3, 19) umgebogen sind und eine u-förmige Geometrie aufweisen, so daß Rastnasen (5, 6, 15, 16, 21, 22) gebildet sind, wobei der gekrümmte Bereich (10, 11) der Rastnasen (5, 6, 15, 16) gegen die Rastkontur (3, 19) anliegt und daß die Rasteinrichtung Zapfen (7, 8, 12, 13, 24, 25) aufweist in denen die Rastnasen (5, 6, 15, 16) radial geführt sind.

5. Rasteinrichtung nach Anspruch 4, **dadurch gekennzeichnet, daß** der gekrümmte Bereich (10, 11) der Rastnasen (5, 6, 15, 16) einen Durchmesser aufweist, der im Betrag zwischen dem halben bis 3-fachen der Teilung der Rastkontur (3, 19) liegt.

6. Rasteinrichtung nach einem der Ansprüche 4 und 5, **dadurch gekennzeichnet, daß** die Schenkel der Rastnasen (15, 16) gebogen ausgeführt sind, so daß ein Mittenversatz zwischen den Rastnasen (15, 16) und der Rastscheibe (2, 18) ausgleichbar ist.

7. Rasteinrichtung nach einem der Ansprüche 3 bis 5, **dadurch gekennzeichnet, daß** jede Rastnase (5, 6, 15, 16) durch mindestens einen innerhalb (7, 8, 21, 22) oder innerhalb (7, 8, 21, 22) und außerhalb (12, 13) der u-förmigen Geometrie angeordneten Zapfen radial geführt ist.

8. Rasteinrichtung nach einem der Ansprüche 3 bis 6, **dadurch gekennzeichnet, daß** die Zapfen (7, 8, 12, 13, 21, 22) mit Anschlägen und/oder Nuten versehen sind, in denen die Blattfeder (4, 17, 20) axial gehalten ist.

9. Rasteinrichtung nach einem der Ansprüche 3 bis 7, **dadurch gekennzeichnet, daß** die Zapfen (7, 8, 12, 13, 21, 22) in der Rasteinrichtung (1) in unmittelbarer Nähe der Rastscheibe (2, 18) angeordnet sind, so daß ein Springen der Blattfeder (4, 17, 20) unterbunden ist.

10. Rasteinrichtung nach einem der Ansprüche 1 bis 8, **dadurch gekennzeichnet, daß** die Enden der Blattfeder (4, 17, 20) verjüngt und axial versetzt ausgebildet sind und an axial unterschiedlichen Bereichen an der Rastscheibe (2, 18) anliegen.

11. Rasteinrichtung nach einem der Ansprüche 1 bis 9, **dadurch gekennzeichnet, daß** die Rastscheibe (2, 18) einen konstanten Durchmesser aufweist und daß am Umfang der Rastscheibe (2, 18) mindestens eine Vertiefung (14) angeordnet ist, in die die Rastnasen (5, 6) einrasten können, so daß eine feste Einstellung des Bauelementes bestimmbar ist.

12. Rasteinrichtung nach einem der Ansprüche 1 bis 10, **dadurch gekennzeichnet, daß** die Rastscheibe (2, 18) unterschiedliche Durchmesser aufweist.

13. Rasteinrichtung nach einem der Ansprüche 1 bis 11, **dadurch gekennzeichnet, daß** die Rastscheibe (2, 18) in axiale Richtung geteilt ausgeführt ist und die geteilten Abschnitte der Rastscheibe (2, 18) konstante oder unterschiedliche Durchmesser aufweisen und die Rastnasen (5, 6, 15, 16) der Blattfeder (4, 17, 20) axial versetzt ausgebildet sind, so daß jede Rastnase (5, 6, 15, 16) an einem anderen Abschnitt der Rastscheibe (2, 18) anliegt.

## Claims

1. A ratchet device for a rotation adjustable electric component, in particular a rotary switch or a rotary resistance, with a leaf spring (4, 17, 20) which abuts a ratchet contour (3, 19) under spring force, said ratchet contour (3, 19) being circumferentially mounted on a ratchet disc (2, 18) and the end regions of the leaf spring (4, 17, 20) abutting said ratchet contour (3, 19) under spring bias, **characterized in that** said leaf spring (4, 17, 20) is free to move except for the end regions thereof, which are radially guided.

2. The ratchet device as set forth in claim 1, **characterized in that** the ratchet contour (3) is mounted to the outer side of a ratchet disc (2) and that the leaf spring (4, 17) circumferentially encloses said ratchet disc (2) and diametrically abuts said ratchet disc (2).

3. The ratchet device as set forth in claim 1, **characterized in that** the ratchet contour (19) is mounted to the inner side of a ratchet disc (18) and that the leaf spring (20) diametrically abuts the ratchet contour (19).

4. The ratchet device as set forth in any one of the claims 1 through 3, **characterized in that** the ends of the leaf spring (4, 17, 20) are bent substantially at right angles in the direction of the ratchet contour (3, 19) and comprise a U-shaped geometry so that ratchet lugs (5, 6, 15, 16, 21, 22) are formed, the curved region (10, 11) of said ratchet lugs (5, 6, 15, 16) abutting said ratchet contour (3, 19) and that the ratchet device comprises pins (7, 8, 12, 13, 24, 25) for radial guidance of said ratchet lugs (5, 6, 15, 16) therein.

5. The ratchet device as set forth in claim 4, **characterized in that** the curved region (10, 11) of the ratchet lugs (5, 6, 15, 16) has a diameter that is between half and three times the division of the ratchet contour (3, 19).

6. The ratchet device as set forth in any one of the claims 4 and 5, **characterized in that** the legs of the ratchet lugs (15, 16) are configured to be bent so that a central offset between the ratchet lugs (15, 16) and the ratchet disc (2, 18) may be compensated for.

7. The ratchet device as set forth in any one of the claims 3 through 5, **characterized in that** each ratchet lug (5, 6, 15, 16) is radially guided by at least one pin disposed inside (7, 8, 21, 22) or inside (7, 8, 21, 22) and outside (12, 13) the U-shaped geometry.

8. The ratchet device as set forth in any one of the claims 3 through 6, **characterized in that** the pins (7, 8, 12, 13, 21, 22) are provided with limit stops and/or grooves for axially retaining the leaf spring (4, 17, 20).

9. The ratchet device as set forth in any one of the claims 3 through 7, **characterized in that** the pins (7, 8, 12, 13, 21, 22) are disposed in the ratchet device (1) in immediate proximity to the ratchet disc (2, 18) so as to prevent the leaf spring (4, 17, 20) from jumping.

10. The ratchet device as set forth in any one of the claims 1 through 8, **characterized in that** the ends of the leaf spring (4, 17, 20) are configured to taper and to be axially offset and that they abut the ratchet disc (2, 18) in axially different regions.

11. The ratchet device as set forth in any one of the claims 1 through 9, **characterized in that** the ratchet disc (2, 18) has a constant diameter and that at least one depression (14) for the ratchet lugs (5, 6) to snap-fit into is disposed on the circumference of the ratchet disc (2, 18) so that it is possible to determine a fixed setting for the component.

12. The ratchet device as set forth in any one of the claims 1 through 10, **characterized in that** the ratchet disc (2, 18) has different diameters.

13. The ratchet device as set forth in any one of the claims 1 through 11, **characterized in that** the ratchet disc (2, 18) is configured to be divided in the axial direction and that the divided portions of the ratchet disc (2, 18) have constant or different diameters and that the ratchet lugs (5, 6, 15, 16) of the leaf spring (4, 17, 20) are configured to be axially offset so that each ratchet lug (5, 6, 15, 16) abuts another portion of the ratchet disc (2, 18).

## Revendications

1. Dispositif à crans d'arrêt pour un composant électrique réglable par rotation, en particulier un commutateur rotatif ou un potentiomètre, comprenant un ressort à lames (4, 17, 20) qui s'applique sous l'effet de ressort contre un contour à crans (3, 19), le contour à crans (3, 19) étant disposé sur la circonférence d'un disque à crans (2, 18) et les zones d'extrémité du ressort à lames (4, 17, 20) s'appuyant sous tension de ressort sur ledit contour à crans (3, 19), **caractérisé par le fait que** ledit ressort à lames (4, 17, 20) n'est guidé radialement que dans les zones d'extrémité, mais peut, à part cela, se mouvoir librement.

2. Dispositif à crans d'arrêt selon la revendication 1, **caractérisé par le fait que** ledit contour à crans (3) est disposé sur la face extérieure d'un disque à crans (2) et que ledit ressort à lames (4, 17) entoure le disque à crans (2) sur la circonférence et s'appuie diamétralement sur ledit disque à crans (2).

3. Dispositif à crans d'arrêt selon la revendication 1, **caractérisé par le fait que** le contour à crans (19) est disposé sur la face intérieure d'un disque à crans (18) et que le ressort à lames (20) s'applique diamétralement contre le contour à crans (19).

4. Dispositif à crans d'arrêt selon l'une quelconque des revendications 1 à 3, **caractérisé par le fait que** les extrémités du ressort à lames (4, 17, 20) sont repliées pour l'essentiel à angle droit en direction du contour à crans (3, 19) et présentent une géométrie en U de manière à former des nez d'arrêt (5, 6, 15, 16, 21, 22), la zone courbée (10, 11) desdits nez d'arrêt (5, 6, 15, 16) s'appliquant contre le contour à crans (3, 19), et que le dispositif à crans d'arrêt présente des tenons (7, 8, 12, 13, 24, 25) dans lesquels lesdits nez d'arrêt (5, 6, 15, 16) sont guidés radialement.

5. Dispositif à crans d'arrêt selon la revendication 4, **caractérisé par le fait que** ladite zone courbée (10, 11) des nez d'arrêt (5, 6, 15, 16) présente un diamètre dont la valeur est comprise entre la moitié et le triple du pas du contour à crans (3, 19).

6. Dispositif à crans d'arrêt selon l'une quelconque des revendications 4 et 5, **caractérisé par le fait que** les branches des nez d'arrêt (15, 16) sont courbées de sorte que l'on puisse compenser un déport du centre entre lesdits nez d'arrêt (15, 16) et le disque à crans (2, 18).

7. Dispositif à crans d'arrêt selon l'une quelconque des revendications 3 à 5, **caractérisé par le fait que** chaque nez d'arrêt (5, 6, 15, 16) est guidé radialement par au moins un tenon disposé à l'intérieur (7, 8, 21, 22) ou à l'intérieur (7, 8, 21, 22) et à l'extérieur (12, 13) de la géométrie en U.

8. Dispositif à crans d'arrêt selon l'une quelconque des revendications 3 à 6, **caractérisé par le fait que** les tenons (7, 8, 12, 13, 21, 22) sont pourvus de butées et/ou de rainures dans lesquelles ledit ressort à lames (4, 17, 20) est tenu axialement.

9. Dispositif à crans d'arrêt selon l'une quelconque des revendications 3 à 7, **caractérisé par le fait que** lesdits tenons (7, 8, 12, 13, 21, 22) sont disposés, dans le dispositif à crans d'arrêt (1), à proximité immédiate du disque à crans (2, 18) de manière à éviter que le ressort à lames (4, 17, 20) ne saute.

10. Dispositif à crans d'arrêt selon l'une quelconque des revendications 1 à 8, **caractérisé par le fait que** les extrémités du ressort à lames (4, 17, 20) sont réalisées de manière à être rétrécies et axialement décalées et s'appliquent contre des zones axialement différentes sur ledit disque à crans (2, 18).

11. Dispositif à crans d'arrêt selon l'une quelconque des revendications 1 à 9, **caractérisé par le fait que** le disque à cran (2, 18) présente un diamètre constant et que sur la circonférence du disque à crans (2, 18) est disposé au moins un creux (14) dans lequel peuvent s'enclencher les nez d'arrêt (5, 6) de sorte qu'un réglage fixe du composant puisse être déterminé.

12. Dispositif à crans d'arrêt selon l'une quelconque des revendications 1 à 10, **caractérisé par le fait que** le disque à crans (2, 18) présente des diamètres différents.

13. Dispositif à crans d'arrêt selon l'une quelconque des revendications 1 à 11, **caractérisé par le fait que** le disque à crans (2, 18) est divisé dans la direction axiale et les tranches séparées du disque à crans (2, 18) présentent des diamètres constants ou différents, et que les nez d'arrêt (5, 6, 15, 16) du ressort à lames (4, 17, 20) sont réalisés de manière à être axialement décalés de sorte que chacun des nez d'arrêt (5, 6, 15, 16) s'applique contre une autre tranche du disque à crans (2, 18).
